# EUROPEAN PATENT APPLICATION

(11) **EP 1 033 277 A1**
(43) Date of publication of application: **06.09.2000**
(21) Application number: 00104339.7
(22) Date of filing: 02.03.2000
(51) Int. Cl.: B60M 1/28

(54) **Apparatus for and method of measuring wear of a power line**

(30) Priority: 04.03.1999 GB 9904927; 21.01.2000 GB 0001275
(71) Applicant: ROKE MANOR RESEARCH LIMITED, Romsey, Hampshire SO51 0ZN (GB)
(72) Inventor: Assinder, Graham, Hampshire, SO51 7WA (GB); Sparks, Edmund, Curdridge, Hampshire SO32 2DA (GB)
(74) Representative: Kay, Ross Marcel

(57) **Abstract**

A standard method of providing power to an electric locomotive comprises an overhead power line from which power is transmitted to the locomotive through a pantograph. However, the overhead power line is gradually worn by the passage of pantographs. The present invention provides a way of measuring the wear caused by the passage of pantographs and comprises scanning means (100) for generating information corresponding to the periphery of the power line. Processing means (112) are coupled to the scanning means (100) in order to measure the thickness of the power line and the wear of the power line from the information corresponding to the periphery of the power line. It is thus advantageously possible to very accurately measure wear of the power line. The present invention also facilitates digital recording of measurements and does not require the apparatus to be in physical contact with the power line.

## Description

The present invention relates to an apparatus for and method of measuring wear of a power line, of the type used to transfer electric power to a vehicle, for example, a locomotive.

A standard method of providing power to an electric locomotive comprises an overhead power line from which power is transmitted to the locomotive through a pantograph. However, the overhead power line is gradually worn by the passage of pantographs. As a result of wear, sections of the power line may no longer meet physical strength or electrical conductivity requirements necessary for the railway to operate efficiently. Therefore, the worn sections of the power line must be replaced.

It should be understood that use of the term "power line" is intended to include any conductor of electrical energy, for example a wire or cable, the power line need not be used exclusively for providing power to a vehicle.

It is therefore an object of the present invention to measure the wear of power lines in order to determine when maintenance is required. According to the present invention, there is provided an apparatus for measuring wear of a power line, the apparatus comprising electromagnetic scanning means for generating information corresponding to the periphery of the power line and processing means coupled to the scanning means for processing the information generated by the scanning means in order to determine the thickness of the power line and the wear of the power line from the information corresponding to the periphery of the power line.

Preferably, the scanning means is coupled to a conductor arrangement of a vehicle.

Preferably, the electromagnetic scanning means is an optical scanning means.

Preferably, the apparatus is arranged to take measurements at predetermined temporal or spatial intervals.

Preferably, at least the scanning means is arranged to be located between a first element and a second element of a pantograph, the first and second elements being arranged to be substantially in contact with the power line.

Preferably, the processing means is arranged to identify the outer-most edges of the power line.

Preferably, the processing means is arranged to identify edges corresponding to, in cross-section, intersections of a geometric chord defining a worn surface of the power line and the unworn periphery of the power line.

A pantograph may comprise the apparatus for measuring wear of a power line described above.

A locomotive may comprise the apparatus for measuring wear of a power line described above.

According to the present invention, there is also provided a method of measuring wear of a power line comprising the steps of: scanning the power line to generate information corresponding to the periphery of the power line, and determining the thickness of the power line and wear of the power line from the information corresponding to the periphery of the power line.

Preferably, the method further comprises the step of generating a profile of wear of at least one section of the power line using position and speed information associated with a scanning means.

It is thus possible to provide an apparatus for and method of measuring wear of a power line which facilitates digital recording of measurements and does not require the apparatus to be in physical contact with the power line. It is also possible to measure wear of the power line very accurately, for example, within ±0.05 mm (which is within the critical range of wear values). Additionally, measurement can be made from a moving locomotive, or test vehicle, travelling at speed along a track. Due to the ability to take measurements continuously, or at intervals of upwards of a few millimetres, it is advantageously possible to detect sections of the power line suffering from greater wear.

At least one embodiment of the invention will now be described, by way of example, with reference to the accompanying drawing, in which:
Figure 1 is a schematic diagram of a pantograph carrying an apparatus constituting an embodiment of the invention;
Figure 2 is a perspective view of Figure 1;
Figure 3 is a plan view of Figure 1;
Figure 4 is schematic diagram of the apparatus of Figure 1;
Figure 5 is a schematic diagram of the apparatus of Figure 4 in more detail, and
Figure 6 is a cross-sectional view of a worn power line.

Throughout the foregoing description like reference numerals will be used to identify like parts.

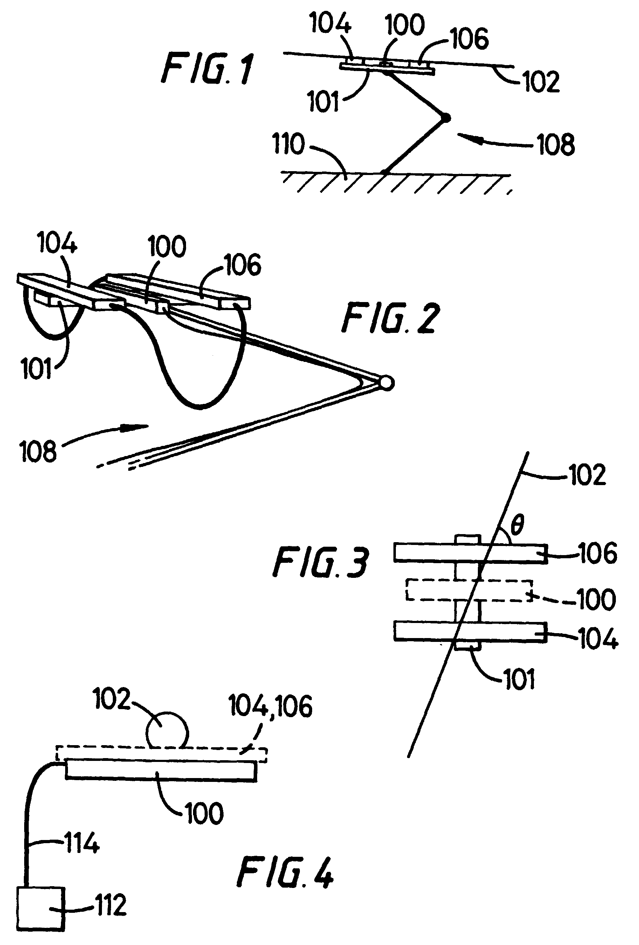

Referring to Figures 1 and 2, a scanner 100 for measuring a power cable, for example, a wire 102 forming part of a power supply network of a railway is located between a first conductor 104 and a second conductor 106 of a pantograph 108, the scanner 100 being attached to a pantograph head 101. Consequently, the wire 102 is kept straight and the distance between the scanner 100 and the wire 102 is constant. The pantograph 108 is carried by a vehicle 110 travelling at speed along a track., the vehicle being, for example, a moving locomotive, such as a test vehicle. As the wire 102 zigzags relative to the direction of a railway track (not shown), the wire 102 usually lies at an angle θ (Figure 3) relative to the first and second conductors 104, 106. The angle θ is specified for illustrative purposes only and varies at different sections along the wire 102.

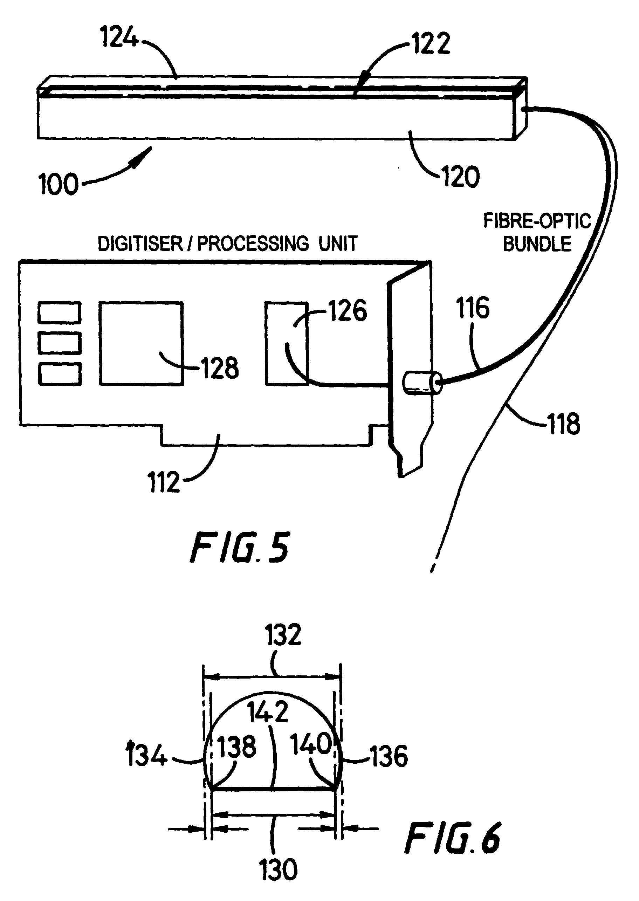

Referring to Figure 4, the scanner 100 is coupled to a processing unit 112, which in this example includes a digitiser (not shown), via a cable loom 114. The cable loom 114 (Figure 5) comprises a fibre-optic bundle 116 and a power cable 118. Alternatively, a piped light source can be used. The scanner 100 comprises light source 120 and an array of linear, collimated, optical-fibres 122, a protective transparent cover 124 being disposed adjacent the collimated optical-fibre array 120. The array of optical-fibres 122 are brought together to form the fibre-optic bundle 116. The array of optical-fibres 122 can be a fused fibre bundle, or alternatively, an array of sensors, for example, a Charged Couple Device (CCD) array.

A first end of the power cable 118 is coupled to the light source 120, the second end of the power cable 118 being coupled to a power supply (not shown). A first end of the fibre-optic bundle 116 is the array of optical-fibres 122. A second end of the fibre-optic bundle 116 is coupled to a device in the processing unit 112 capable of converting optical energy into electrical energy, for example, a linescan CCD array 126 or any other such device known in the art. Of course, other techniques for conveying optical information generated by the scanner 100 to the processor unit 112 can be employed, for example, the optical information can be converted to electrical energy in the scanner 100 and the fibre-optic bundle 116 can be replaced with an electrical connection.

In operation, the scanner 100 directs light from the light source 120 to the wire 102; light reflected by the wire 102 is received by the array of collimated optical-fibres 122 and directed, via the optical fibre bundle 116 to the processing unit 112. The light received by the processing unit 112 contains information corresponding to the periphery of the wire 102. The light received is converted to electrical energy using the linescan CCD array 126. The electrical energy is digitised and processed by a processor 128 coupled (not shown) to the linescan CCD array 126 in order to measure a worn portion 130 of the wire 102 and an original outer-periphery thickness 132 of the wire 102.

In order to measure the original outer-periphery thickness 132, the processing unit 112 identifies a first outer-most edge 134 and a second outer-most edge 136 of the power line 102. In order to measure the worn portion 130, the processing means identifies a first worn edge 138 and a second worn edge 140 corresponding to, in cross-section, intersections of a geometric chord 142 defining a worn surface 142 of the power line 102 and the periphery of the power line.

From the thickness measurements 130, 132 of the wire 102, it is possible to calculate wear of a section of the wire 102. Acceptable wear of the wire 102 is determined relative to the diameter of the wire 102, i.e. the original outer-periphery thickness 132, and can be up to 50% of the diameter of the wire 102. .

The measurements made are digitally recorded using any suitable device known in the art, for example, a magnetic tape or a computer hard disc drive.

The measurements can be made continuously, or at predetermined intervals, for example a few millimetres, such as every 5 mm or more apart, and the wear between measurements approximated. Thus, if a given measurement constitutes a rogue value, the rogue value can be detected more easily by instantaneously filtering the given measurement using measurements taken before and after the given measurement. It should be appreciated that measurements made at predetermined spatial intervals imply measurement made at temporal intervals determined by the speed of the vehicle 110.

The accuracy of the scanner 100 can be varied by modifying the resolution of the scanner 100. Typically, the scanner can have a resolution of about 24 samples per centimetre.

In another embodiment if the invention, measurements taken can be incorporated with position and speed information relating to the locomotive in order to permit the a profile of wear along any section of the railway to be reconstructed.

Although the above example has been described in the context of optical energy, it should be appreciated that the invention is not limited to the optical portion of the electromagnetic spectrum and the use of other parts of the electromagnetic spectrum is envisaged.

## Claims

1. An apparatus for measuring wear of a power line, the apparatus comprising electromagnetic scanning means for generating information corresponding to the periphery of the power line and processing means coupled to the scanning means for processing the information generated by the scanning means in order to measure the thickness of the power line and the wear of the power line from the information corresponding to the periphery of the power line.

2. An apparatus as claimed in Claim 1, wherein the scanning means is coupled to a conductor arrangement of a vehicle.

3. An apparatus as claimed in any one of the preceding claims, wherein the electromagnetic scanning means is an optical scanning means.

4. An apparatus as claimed in any one of the preceding claims, wherein the apparatus is arranged to take measurements at predetermined spatial or temporal intervals.

5. An apparatus as claimed in any one of the preceding claims, wherein at least the scanning means is arranged to be located between a first element and a second element of a pantograph, the first and second elements being arranged to be substantially in contact with the power line.

6. An apparatus as claimed in any one of the preceding claims, wherein the processing means is arranged to identify the outer-most edges of the power line.

7. An apparatus as claimed in any one of the preceding claims, wherein the processing means is arranged to identify edges corresponding to, in cross-section, intersections of a geometric chord defining a worn surface of the power line and the periphery of the power line.

8. A pantograph comprising the apparatus for measuring wear of a power line as claimed in any one of the preceding claims.

9. A locomotive comprising the apparatus for measuring wear of a power line as claimed in any one of Claims 1 to 7.

10. A method of measuring wear of a power line comprising the steps of: scanning the power line to generate information corresponding to the periphery of the power line, and determining the thickness of the power line and wear of the power line from the information corresponding to the periphery of the power line.

11. A method as claimed in Claim 10, further comprising the step of generating a profile of wear of at least one section of the power line using position and speed information associated with a scanning means.
